# EUROPEAN PATENT APPLICATION

(11) **EP 4 503 171 A1**
(43) Date of publication of application: **05.02.2025**
(21) Application number: 22934210.0
(22) Date of filing: 31.03.2022
(51) Int. Cl.: H01M 4/133, H01M 10/0525

(54) **ELECTROCHEMICAL APPARATUS, MODULE, AND ELECTRONIC APPARATUS**

(71) Applicant: Ningde Amperex Technology Limited, Ningde, Fujian 352100 (CN)
(72) Inventor: YAN, Dongyang, Ningde, Fujian 352100 (CN)
(74) Representative: Icosa
(86) International application number: PCT/CN2022/084468
(87) International publication number: WO 2023/184369

(57) **Abstract**

An electrochemical device includes an electrode assembly. The electrode assembly is formed by winding a stacking body. The stacking body includes a first electrode plate, a second electrode plate and a separator film. The first electrode plate includes a first conductive layer, a first conductive material layer and a first layer. The first conductive layer includes a first surface and a second surface arranged oppositely in a third direction, wherein the first surface includes a first region and a second region arranged sequentially in a first direction. The first conductive material layer is disposed in the first region. The second region is exposed from the first conductive material layer. The first conductive material layer includes a first conductive material region and a first edge region, wherein the first conductive material region and the first edge region are arranged sequentially along a second direction. Viewed from the third direction, the first edge region includes a first edge overlapping a boundary line between the first region and the second region, and the first edge is inclined relative to the second direction. Part of the first layer is disposed in the first region. Viewed from the third direction, the first layer extends from the first region to the second region. This application further provides a module and an electronic device.

## Description

### TECHNICAL FIELD

This application relates to the field of energy storage devices, and particularly relates to an electrochemical device, a module and an electronic device.

### BACKGROUND

Electrochemical devices (such as batteries) are widely used in electronic products such as electronic mobile devices, electric tools, and electric automobiles, etc. An electrochemical device typically includes electrode plates and a separator film. However, during the roller pressing process of an electrode plate, a conductive layer for collecting currents can easily develop wrinkles, and if the electrode plate has wrinkles or other damage, this may lead to poor appearance and adverse internal interfaces in the electrochemical device.

### SUMMARY

In order to solve the described shortcomings, it is necessary to provide an electrochemical device capable of reducing the possibility of an electrode plate wrinkling.

Further, it's necessary to provide a module and an electronic device comprising the electrochemical device.

A first aspect of this application provides an electrochemical device, comprising an electrode assembly. The electrode assembly is formed by winding a stacking body. The stacking body comprises a first electrode plate, a second electrode plate and a separator film disposed between the first electrode plate and the second electrode plate. The first electrode plate comprises a first conductive layer, a first conductive material layer and a first layer. The first conductive layer comprises a first surface and a second surface arranged oppositely in a third direction, wherein the first surface comprises a first region and a second region arranged sequentially in a first direction. The first conductive material layer is disposed in the first region. The second region is exposed from the first conductive material layer. The first conductive material layer comprises a first conductive material region and a first edge region, wherein the first conductive material region and the first edge region are arranged sequentially along a second direction. The first direction, the second direction and the third direction are perpendicular to each other. Viewed along the third direction, the first edge region comprises a first edge overlapping a boundary line between the first region and the second region, and the first edge is inclined relative to the second direction. The first layer comprises inorganic insulation particles. Part of the first layer is disposed in the first region. In the second direction, the first edge region is connected between the first conductive material region and the first layer. Viewed along the third direction, the first layer extends from the first region to the second region.

In this application, the first layer is provided on the first region, and the first layer not only can cover burrs and reduce the possibility of a short circuit, but also can reduce the possibility of the first region wrinkling. Moreover, in this application, the first layer extends from the first region to the second region, and can also reduce the possibility of the second region wrinkling.

In some possible implementations, the first conductive layer comprises a first end edge and a second end edge arranged oppositely in the first direction. The first region comprises the first end edge, and the second region comprises the second end edge. The first layer extends from the first end edge to the second end edge. Thus, the first layer can reduce the possibility of the second region wrinkling under excessive pressure.

In some possible implementations, the first conductive layer further comprises a third end edge and a fourth end edge arranged oppositely in the second direction. The first layer is closer to the third end edge than the first edge region. The electrochemical device further comprises first tabs arranged integrally with the first conductive layer, and the first tabs are connected to the third end edge. The energy density can be improved, and the risk of a short circuit of the first tabs can be reduced.

In some possible implementations, viewed from the third direction, the first conductive material region comprises a second edge overlapping the boundary line between the first region and the second region. The first edge intersects the first layer at a first intersection point, and the second edge intersects the fourth end edge at a second intersection point. In the first direction, the distance between the first intersection point and the second end edge is less than the distance between the second intersection point and the second end edge. Thus, the possibility of the second region wrinkling under excessive pressure is further reduced.

In some possible implementations, viewed along the third direction, the first conductive material region comprises the second edge overlapping the boundary line between the first region and the second region. The first edge intersects the first layer at the first intersection point, and the second edge intersects the fourth end edge at the second intersection point. In the first direction, the distance between the first intersection point and the second end edge is greater than the distance between the second intersection point and the second end edge. Thus, the possibility of the second region wrinkling under excessive pressure can also be reduced to some extent, and the required size of the first layer in the first direction can also be reduced. Furthermore, the mixing degree of the first edge region and the first layer in an overlapping region thereof is reduced, thereby being beneficial for improving the electrical performance of an edge region of the first edge region.

In some possible implementations, the first edge is one of an arc-shaped line, a wavy line, a zigzagged line, or a diagonal line.

In some possible implementations, the first electrode plate further comprises a second conductive material layer and a second layer. The second surface comprises a third region and a fourth region arranged sequentially in the first direction. The second conductive material layer is disposed in the third region, and the fourth region is exposed from the second conductive material layer. The second conductive material layer comprises a second conductive material region and a second edge region, and the second conductive material region and the second edge region are arranged sequentially along the second direction. Viewed from the third direction, the second edge region comprises a third edge overlapping a boundary line between the third region and the fourth region, and the third edge is inclined relative to the second direction. The second layer comprises inorganic insulation particles. Part of the second layer is disposed in the third region. In the second direction, the second edge region is connected between the second conductive material region and the second layer. Viewed along the third direction, the second layer extends from the third region to the fourth region. In this application, the second layer is provided on the third region, not only can cover burrs and reduce the possibility of a short circuit, but also can reduce the possibility of the third region wrinkling. Moreover, in this application, the second layer extends from a region overlapping the third region away from the third edge to the fourth region, reducing the possibility of the fourth region wrinkling.

In some possible implementations, viewed along the third direction, the second conductive material region comprises a fourth edge overlapping the boundary line between the third region and the fourth region. The third edge intersects the second layer at a third intersection point, and the fourth edge intersects the fourth end edge at a fourth intersection point. In the first direction, the distance between the third intersection point and the second end edge is less than the distance between the fourth intersection point and the second end edge. Thus, the possibility of the fourth region wrinkling under excessive pressure is reduced.

In some possible implementations, in the first direction, the distance from the first end edge to the second edge is not equal to the distance from the first end edge to the fourth edge. For example, the distance from the first end edge to the second edge is greater than the distance from the first end edge to the fourth edge, so that the problem of the whole conductive layer wrinkling can be improved by designing a conductive material at one side of the first conductive layer, waste of the conductive material can be reduced, and the energy density can be improved.

In some possible implementations, an outer surface of the electrode assembly is the second surface. Since the first conductive layer has greater hardness, the outer surface of the electrode assembly is designated as the second surface, which can increase the hardness of the electrode assembly, thereby enhancing the resistance of the electrode assembly to mechanical impacts.

In some possible implementations, viewed along the third direction, the first layer is further disposed on the first tabs. A region of the first layer disposed on the first tabs is configured to reduce the possibility of burrs on edges of the first tabs puncturing the separator film and contacting the second electrode plate to cause a short circuit.

In some possible implementations, in the second direction, the width of the first layer disposed on the first tabs is from 0.5 mm to 2 mm, so that the effect on the energy density is reduced while the safety is improved.

In some possible implementations, the number of the first tabs is multiple. Therefore, the internal resistance of the first electrode plate is reduced, thereby increasing the charge and discharge rate of the first electrode plate, and the current distribution of the first electrode plate is not excessively concentrated, which promotes uniform current distribution, reduces polarization, and improves lithium plating.

In some possible implementations, the multiple first tabs are connected to the third end edge of the first region.

In some possible implementations, in the third direction, the thickness of the first layer is less than that of the first edge region, and the thickness of the first edge region is less than that of the first conductive material region. Therefore, the first edge region has a thickness buffering effect between the first conductive material region and the first layer, further reducing the possibility of the first conductive layer wrinkling.

In some possible implementations, in the second direction, the width of the first layer is less than that of the first edge region, and the width of the first edge region is less than that of the first conductive material region. Since the width of the first conductive material region is larger, an area proportion of the first edge region in the first conductive material layer is reduced, which is beneficial for increasing the energy density of the electrochemical device.

In some possible implementations, in the second direction, the width of the first layer is from 0.5 mm to 3 mm. Therefore, the first layer not only can fully cover burrs on the third end edge, but also reduces the impact of the first layer on the energy density of the electrochemical device.

In some possible implementations, the electrochemical device further comprises a third layer, and the third layer comprises an insulation material. Viewed from the third direction, the third layer covers the first edge and the second edge, and the third layer at least partially overlaps any one of the first conductive material layer, the first layer and the second region. Therefore, the third layer may have an effect of insulation and protection on the exposed second region, reducing the possibility of the second region contacting the second electrode plate to cause a short circuit during mechanical abuse, and also reducing the possibility that the second region is torn during mechanical abuse and the torn first conductive layer punctures the separator film and contacts the second electrode plate to cause a short circuit. In some possible implementations, the third layer is a bonding layer. In some possible implementations, the third layer is an adhesive tape.

In some possible implementations, in the second direction, the third layer extends beyond the third end edge from a region overlapping the first layer. Thus, a portion of the third layer beyond the third end edge can cover the burrs on the third end edge and can reduce the possibility of the burrs puncturing the separator film and contacting the second electrode plate to cause a short circuit.

In some possible implementations, in the second direction, the third layer extends beyond the fourth end edge from a region overlapping the first conductive material layer and the second region. Thus, a portion of the third layer beyond the fourth end edge can cover burrs on the fourth end edge and can reduce the possibility of the burrs puncturing the separator film and contacting the second electrode plate to cause a short circuit.

In some possible implementations, in the second direction, the third layer extends beyond the third end edge by 0.5 mm to 2 mm, and the third layer extends beyond the fourth end edge by 0.5 mm to 2 mm. In this way, the energy density can be increased.

In some possible implementations, the first layer further comprises a binder for binding the inorganic insulation particles together. A material of the binder is selected from at least one of polypropylene glycol, sodium polyacrylate, potassium polyacrylate, lithium polyacrylate, polyimide, polyamide-imide, styrene butadiene rubber, polyvinyl alcohol, polyvinylidene fluoride, polyvinylidene difluoride, polytetrafluoroethylene, polyvinyl butyral, waterborne acrylic resin, carboxymethyl cellulose or sodium carboxymethyl cellulose.

In some possible implementations, the inorganic insulation particles are selected from at least one of aluminum oxide, silicon oxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide or barium sulfate.

In some possible implementations, the first electrode plate is a cathode, and the first conductive layer is an aluminum foil. This is beneficial for reducing wrinkles of the aluminum foil and reducing the risk of the aluminum foil contacting other polarities to cause short-circuit heating.

A second aspect of this application provides a module, comprising a shell. The module further comprises a plurality of electrochemical devices as described above, and the plurality of electrochemical devices are disposed in the shell.

A third aspect of this application further provides an electronic device, comprising the electrochemical device as described above, or comprising the module as described above.

### BRIEF DESCRIPTION OF THE DRAWINGS

The above and/or additional aspects and advantages of this application will become apparent and easily understood from the following descriptions of embodiments in conjunction with the accompanying drawings below.
FIG. 1 is a front view of an electrochemical device according to an embodiment of this application.
FIG. 2 is a schematic view of the electrochemical device shown in FIG. 1 before packaging.
FIG. 3A is a top view of an electrode assembly of the electrochemical device shown in FIG. 1.
FIG. 3B is a cross-sectional view of the electrochemical device shown in FIG. 1 along IIIB-IIIB.
FIG. 3C is a cross-sectional view of the electrochemical device shown in FIG. 1 along IIIC-IIIC.
FIG. 4A is a schematic front view of an unwound first electrode plate of the electrode assembly shown in FIG. 3A in some embodiments.
FIG. 4B is a schematic front view of the unwound first electrode plate of the electrode assembly shown in FIG. 3A in other embodiments.
FIG. 5 is a schematic back view of the unwound first electrode plate of the electrode assembly shown in FIG. 3A.
FIG. 6 is a schematic view of the first electrode plate shown in FIG. 4A with a third layer removed.
FIG. 7 is a schematic view of the first electrode plate shown in FIG. 5 with a fourth layer removed.
FIG. 8 is a cross-sectional view of the first electrode plate shown in FIG. 6 along VIII-VIII.
FIG. 9A is a partially enlarged view of the unwound first electrode plate of the electrode assembly shown in FIG. 3A in other embodiments.
FIG. 9B is a partially enlarged view of the unwound first electrode plate of the electrode assembly shown in FIG. 3A in other embodiments.
FIG. 9C is a partially enlarged view of the unwound first electrode plate of the electrode assembly shown in FIG. 3A in other embodiments.
FIG. 9D is a partially enlarged view of the unwound first electrode plate of the electrode assembly shown in FIG. 3A in other embodiments.
FIG. 10 is a schematic front view of an unwound first electrode plate according to another embodiment of this application.
FIG. 11 is a schematic view of the first electrode plate shown in FIG. 10 with a third layer removed.
FIG. 12 is a cross-sectional view of the first electrode plate shown in FIG. 10 along XII-XII.
FIG. 13 is a structural schematic view of a module according to an embodiment of this application.
FIG. 14 is an exploded view of the module shown in FIG. 13.
FIG. 15 is a structural schematic view of an electronic device according to an embodiment of this application.

### DESCRIPTION OF REFERENCE SIGNS OF MAIN ELEMENTS

| | |
|---|---|
| Electronic device | 1 |
| Stacking body | 2 |
| Housing | 10 |
| First housing | 11 |
| Second housing | 12 |
| Electrode assembly | 20 |
| First electrode plate | 21 |
| Second electrode plate | 22 |
| Separator film | 23 |
| First tab | 24 |
| Second tab | 25 |
| First conductive plate | 30 |
| Second conductive plate | 40 |
| Third layer | 50 |
| Thirteenth end edge | 51 |
| Fourteenth end edge | 52 |
| Fourth layer | 60 |
| Electrochemical device | 100 |
| First housing region | 111 |
| Second housing region | 112 |
| Third housing region | 121 |
| Fourth housing region | 122 |
| First section | 201 |
| First outer surface | 201a |
| First bent section | 202 |
| Second section | 203 |
| Second outer surface | 203a |
| Second bent section | 204 |
| First connecting end | 205 |
| Second connecting end | 206 |
| Third connecting end | 207 |
| Fourth connecting end | 208 |
| First conductive layer | 210 |
| First surface | 210A |
| First region | 210A1 |
| Second region | 210A2 |
| Second surface | 210B |
| Third region | 210B1 |
| Fourth region | 210B2 |
| First end edge | 210a |
| Second end edge | 210b |
| Third end edge | 210c |
| Fourth end edge | 210d |
| First conductive material layer | 211 |
| Second conductive material layer | 212 |
| First layer | 213 |
| Fifth end edge | 213a |
| Sixth end edge | 213b |
| Seventh end edge | 213c |
| Eighth end edge | 213d |
| Second layer | 214 |
| Ninth end edge | 214a |
| Tenth end edge | 214b |
| Eleventh end edge | 214c |
| Twelfth end edge | 214d |
| Second conductive layer | 220 |
| Third conductive material layer | 221 |
| Fourth conductive material layer | 222 |
| Module | 300 |
| Shell | 301 |
| First conductive material region | 2111 |
| First edge region | 2112 |
| Boundary line | 2113, 2123 |
| First subregion | 2112A |
| Second subregion | 2112B |
| Second conductive material region | 2121 |
| Second edge region | 2122 |
| First edge | S1 |
| Second edge | S2 |
| Third edge | S3 |
| Fourth edge | S4 |
| Intersection point | P |
| First intersection point | P1 |
| Second intersection point | P2 |
| Third intersection point | P3 |
| Fourth intersection point | P4 |
| Dashed line | A-A, B-B |
| Winding direction | D |
| Winding central axis | O |
| First direction | X |
| Second direction | Y |
| Third direction | Z |
| Fourth direction | X' |
| Fifth direction | Z' |
| Thickness | T₀-T₄ |
| Width | W₀-W₂ |
| Distance | L₁-L₈ |

### DETAILED DESCRIPTION OF EMBODIMENTS

The technical solution in the embodiments of this application will be clearly described below in detail. It is evident that the described embodiments are part of the embodiments of this application rather than all embodiments. Unless otherwise defined, all technical and scientific terms used herein have the same meaning as commonly understood by those skilled in the art to which this application pertains. The terms used in the specification of this application are intended solely for describing specific embodiments and are not intended to limit this application.

The embodiments of this application will be described below in detail. However, this application may be embodied in many different forms and should not be construed as limited to the exemplary embodiments set forth herein. Instead, these exemplary embodiments are provided to fully and comprehensively convey this application to those skilled in the art.

Additionally, for brevity and clarity, sizes or thicknesses of various components or layers in the drawings may be exaggerated. Throughout the text, the same reference signs denote the same elements. As used herein, the term "and/or" includes any and all combinations of one or more of the associated listed items. Additionally, it should be understood that when an element A is referred to as being "connected" to an element B, the element A may be directly connected to the element B, or there may be an intermediate element C, and the elements A and B may be indirectly connected.

Moreover, when describing embodiments of this application, "may" is used to indicate "one or more embodiments of this application".

The terminology used herein is for the purpose of describing specific embodiments and is not intended to limit this application. As used herein, the singular form is intended to include the plural form unless otherwise specified in context. It will be further understood that the term "comprising", when used in this specification, indicates the presence of the stated features, values, steps, operations, elements, and/or components, but does not preclude the presence or addition of one or more other features, values, steps, operations, elements, components, and/or combinations thereof.

Spatially related terms such as "above", and the like may be used herein for convenience of description to describe a relationship between one element or feature as depicted in the drawings and another element(s) or feature(s). It should be understood that, aside from orientations depicted in the drawings, spatially related terms are intended to encompass different orientations of devices or apparatuses during use or operation. For example, if a device in the drawing is turned over, an element described as being "above" or "over" of another element will be oriented "below" or "underneath" the other elements or features. Therefore, the exemplary term "above" may include directions both above and below. It should be understood that although terms such as first, second, third, etc., may be used herein to describe various elements, components, regions, layers, and/or sections, these elements, components, regions, layers, and/or sections should not be limited by these terms. These terms are used to distinguish one element, component, region, layer or section from another element, component, region, layer or section. Thus, a first element, component, region, layer, or section discussed below can be referred to as a second element, component, region, layer, or section without departing from the teachings of the exemplary embodiments.

In this application, design relationships such as greater than, less than, or not equal to between parameter values are intended to exclude reasonable errors of measuring devices.

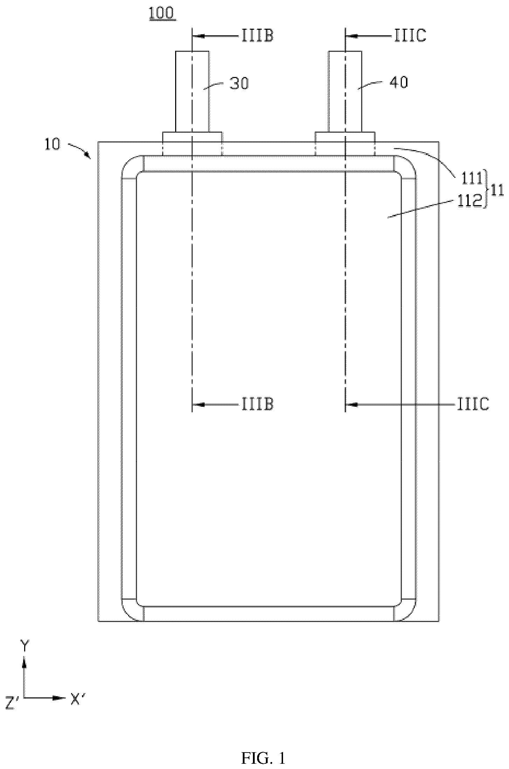

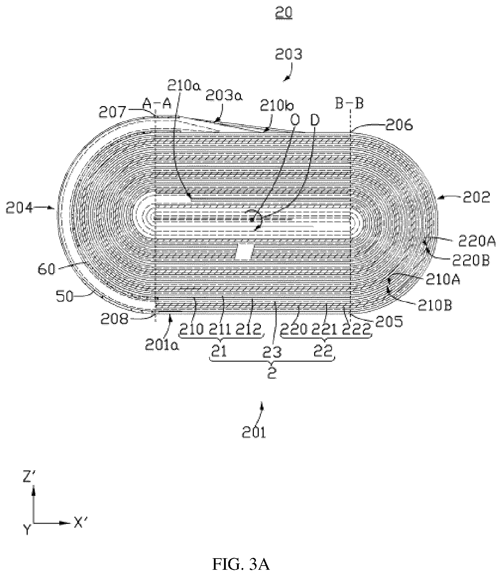

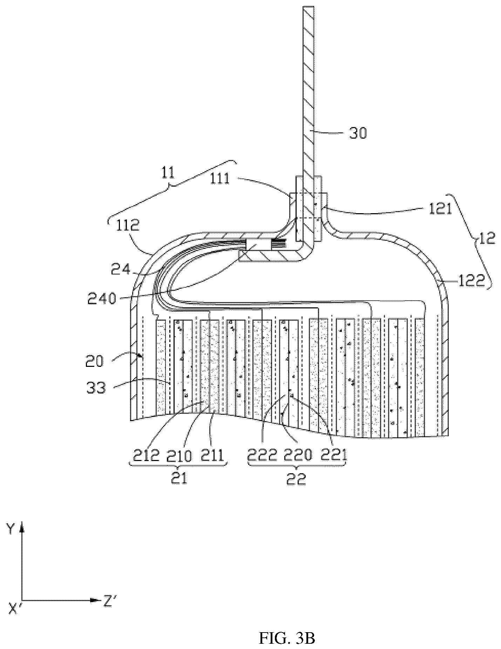

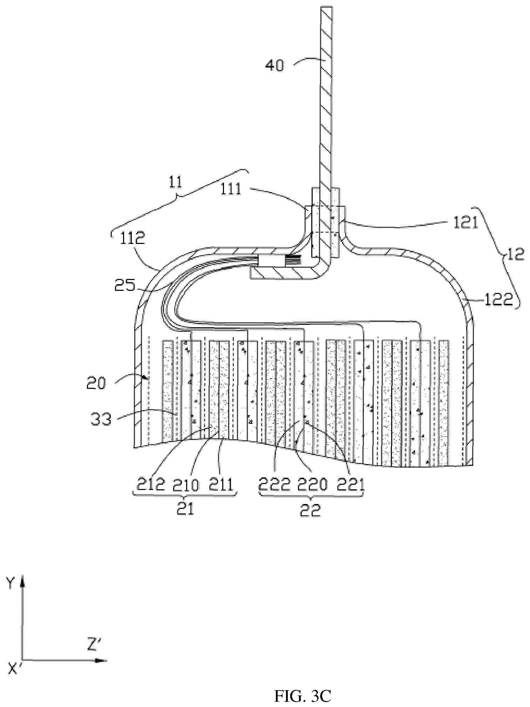

Referring to Figs. 1 to 3A, an embodiment of this application provides an electrochemical device 100, including a housing 10 and an electrode assembly 20 disposed in the housing 10. As shown in FIG. 3A, the electrode assembly 20 is formed by winding a stacking body 2. The stacking body 2 includes a first electrode plate 21, a second electrode plate 22 and a separator film 23 disposed between the first electrode plate 21 and the second electrode plate 22. The separator film 23 is configured to prevent direct contact between the first electrode plate 21 and the second electrode plate 22, thereby reducing the possibility of the first electrode plate 21 contacting the second electrode plate 22 to cause a short circuit. The electrochemical device 100 further includes a first conductive plate 30 and a second conductive plate 40. The first conductive plate 30 is electrically connected to the first electrode plate 21, and the second conductive plate 40 is electrically connected to the second electrode plate 22. The first conductive plate 30 and the second conductive plate 40 extend out from one end of the housing 10 to be connected to an external device (not shown in the figure). Further referring to FIG. 3B and FIG. 3C, the electrode assembly 20 further includes first tabs 24 and second tabs 25. One end of each of the first tabs 24 is electrically connected to the first electrode plate 21, and the other end of each of the first tabs is electrically connected to the first conductive plate 30. One end of each of the second tabs 25 is electrically connected to the second electrode plate 22, and the other end of each of the second tabs is electrically connected to the second conductive plate 40. A three-dimensional coordinate system is established according to a second direction Y, a fourth direction X' and a fifth direction Z' that are perpendicular to each other. In this application, the fourth direction X' is a direction from the first conductive plate 30 to the second conductive plate 40; the second direction Y is a direction in which the first conductive plate 30 or the second conductive plate 40 protrudes from the stacking body 2, and is also a direction of a winding central axis O of the electrode assembly 20; and the fifth direction Z' is a direction perpendicular to one surface of the first conductive plate 30. The first electrode plate 21, the separator film 23 and the second electrode plate 22 are stacked sequentially and wound around the winding central axis O to form the electrode assembly 20. For example, the stacking body 2 can be wound clockwise (a winding direction D) around the winding central axis O to form the electrode assembly 20. In some embodiments, after winding, an outermost layer of the first electrode plate 21, the separator film 23 and the second electrode plate 22 is the first electrode plate 21. The first electrode plate 21 may be a positive electrode, and the second electrode plate 22 may be a negative electrode. Due to the greater hardness of the electrode plate, configuring the outermost layer as the first electrode plate 21 can increase the hardness of the electrode assembly 20, thereby enhancing the resistance of the electrode assembly 20 to mechanical impacts. In other embodiments, the first electrode plate 21 may be a negative electrode, and the second electrode plate 22 may be a positive electrode. In other embodiments, after winding, the outermost layer of the first electrode plate 21, the separator film 23 and the second electrode plate 22 may also be the second electrode plate 22 or the separator film 23.

As shown in FIG. 3A, in the winding direction D, the electrode assembly 20 includes a first section 201, a first bent section 202, a second section 203 and a second bent section 204 which are connected in sequence. The fifth direction Z' is also a stacking direction of the first conductive layer 21 in the first section 201 or the second section 203. In some embodiments, the first section 201 and the second section 203 may be flat and straight sections. In other embodiments, in the winding direction D, the electrode assembly 20 may also include four bent sections connected in sequence.

The first section 201 has a first outer surface 201a, and the second section 203 has a second outer surface 203a. A connection between the first section 201 located at an outermost side of the electrode assembly 20 and the first bent section 202 located at the outermost side of the electrode assembly 20 serves as a first connecting end 205. The first connecting end 205 is a starting portion of a rightmost bent edge of the first bent section 202 in the winding direction D in FIG. 3A, and the first connecting end 205 is also a portion where a dashed line B-B, formed by extending in the fifth direction Z' a bent edge located at an innermost and right side of the electrode assembly 20, intersects the first outer surface 201a. A connection between the first bent section 202 located at the outermost side of the electrode assembly 20 and the second section 203 located at the outermost side of the electrode assembly 20 serves as a second connecting end 206. The second connecting end 206 is a finishing portion of the rightmost bent edge of the first bent section 202 in the winding direction D in FIG. 3A, and the second connecting end 206 is also a portion where the dashed line B-B, formed by extending in the fifth direction Z' the bent edge located at the innermost and right side of the electrode assembly 20, intersects the second outer surface 203a. A connection between the second section 203 at the outermost side of the electrode assembly 20 and the second bent section 204 located at the outermost side of the electrode assembly 20 serves as a third connecting end 207. The third connecting end 207 is a starting portion of a leftmost curve of the second bent section 204 in the winding direction D in FIG. 3A, and the third connecting end 207 is also a portion where a dashed line A-A, formed by extending in the fifth direction Z' a bent edge located at an innermost and left side of the electrode assembly 20, intersects the second outer surface 203a. A connection between the second bent section 204 located at the outermost side of the electrode assembly 20 and the first section 201 located at the outermost side of the electrode assembly 20 serves as a fourth connecting end 208. The fourth connecting end 208 is a finishing portion of the leftmost curve of the second bent section 204 in the winding direction D in FIG. 3A, and the fourth connecting end 208 is also a portion where the dashed line A-A, formed by extending in the fifth direction Z' the bent edge located at the innermost and left side of the electrode assembly 20, intersects the first outer surface 201a. In the fifth direction Z', the first connecting end 205 and the second connecting end 206 are aligned, and the third connecting end 207 and the fourth connecting end 208 are aligned.

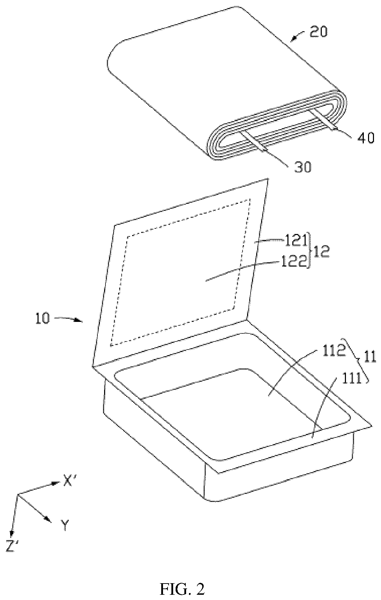

In some embodiments, the housing 10 may be a packaged pouch formed by packaging using a packaging film, i.e., the electrochemical device 100 is a pouch cell. As shown in FIG. 2, FIG. 3B and FIG. 3C, the housing 10 includes a first housing 11 and a second housing 12 arranged oppositely in the fifth direction Z'. The first housing 11 includes a first housing region 111 and a second housing region 112 that are connected. Three sides of the second housing region 112 are surrounded by the first housing region 111. The second housing 12 includes a third housing region 121 and a fourth housing region 122 that are connected. Three sides of the fourth housing region 122 are surrounded by the third housing region 121. The second housing region 112 and the fourth housing region 122 together form an accommodating space (now shown in the figure) for accommodating the electrode assembly 20. The first housing region 111 is connected to the third housing region 121 to seal the accommodating space. The first conductive plate 30 is electrically connected to the stacking body 2 via the first tabs 24 and extends out of the housing 10 from a connection between the first housing region 111 and the third housing region 121, so that the first conductive plate 30 can be used for connecting the stacking body 2 to the external device. The second conductive plate 40 is connected to the stacking body 2 via the second tabs 25 and extends out of the housing 10 from the connection between the first housing region 111 and the third housing region 121, so that the second conductive plate 40 can be used for connecting the stacking body 2 to the external device. In some embodiments, the first conductive plate 30 and the second conductive plate 40 can extend out of the housing 10 along the second direction Y. In other embodiments, the housing 10 may also be a metal housing, for example, may be a steel housing or an aluminum housing, etc.

As shown in FIG. 3A, the first electrode plate 21 includes a first conductive material layer 211, a first conductive layer 210 and a second conductive material layer 212 that are stacked sequentially. The first conductive layer 210 may have a function of current collection, for example, the first conductive layer 210 may include aluminum or nickel. In some embodiments, the first conductive layer 210 includes aluminum. In some embodiments, the first electrode plate 21 is a cathode, the first conductive layer 210 includes an aluminum foil, and the aluminum foil has relatively low strength but relatively good conductive performance. Both the first conductive material layer 211 and the second conductive material layer 212 include active substances, for example, include at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadyl phosphate, a lithium-rich manganese-based material or lithium nickel cobalt aluminum oxide.

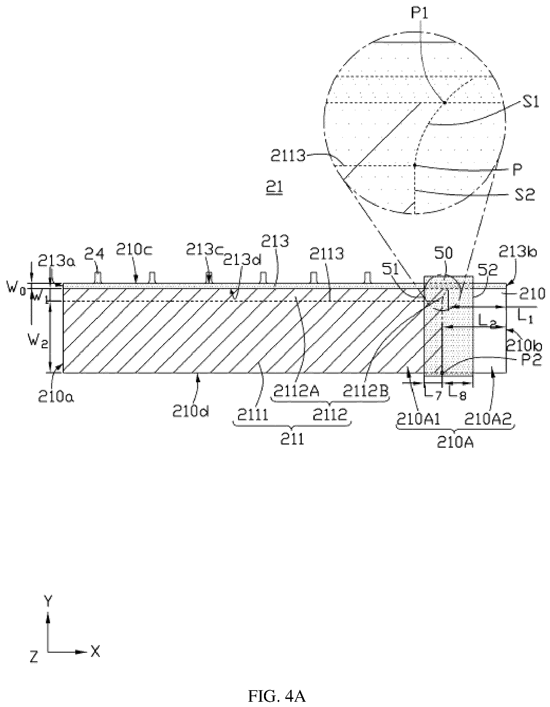

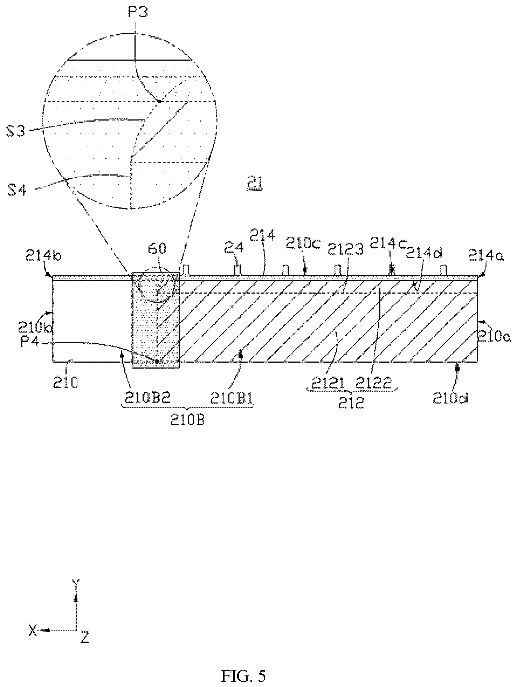

The first conductive layer 210 includes a first surface 210A and a second surface 210B arranged oppositely. As shown in FIG. 3A, viewed along the second direction Y, the first surface 210A of the first conductive layer 210 is closer to the winding central axis O of the electrode assembly 20 than the second surface 210B. As shown in FIG. 4A and FIG. 5, after the first conductive layer 210 is unwound, another three-dimensional coordinate system is established according to the first direction X, the second direction Y and the third direction Z that are perpendicular to each other. In this application, the first direction X is an extension direction of the first electrode plate 21 before the stacking body 2 is wound, and the third direction Z also is a stacking direction of the first conductive material layer 211, the first conductive layer 210 and the second conductive material layer 212 after the first conductive layer 210 is unwound. As shown in FIG. 4A and FIG. 5, viewed along the third direction Z, the first conductive layer 210 includes a first end edge 210a and a second end edge 210b arranged oppositely in the first direction X. The first end edge 210a serves as a starting end for winding the first conductive layer 210, and the second end edge 210b serves as a finishing end for winding the first conductive layer 210. Both the first end edge 210a and the second end edge 210b extend along the second direction Y. The first direction X is also a direction from the first end edge 210a to the second end edge 210b. Together referring to FIG. 3A, in some embodiments, after the stacking body 2 is wound around the winding central axis O to form the electrode assembly 20, the first end edge 210a is located at the center of the electrode assembly 20, and the second end edge 210b is located on the second outer surface 203a of the electrode assembly 20. As shown in FIG. 4A and FIG. 5, the first conductive layer 210 further includes a third end edge 210c and a fourth end edge 210d arranged oppositely in the second direction Y. The third end edge 210c is connected between the first end edge 210a and the second end edge 210b, and the fourth end edge 210d is also connected between the first end edge 210a and the second end edge 210b. The first tabs 24 are connected to the third end edge 210c.

In some embodiments, the first tabs 24 are integrally formed with the first conductive layer 210 and extend out of the third end edge 210c. For example, the first tabs 24 are formed by cutting the first conductive layer 210. In some embodiments, the number of the first tabs 24 is multiple. By providing the multiple first tabs 24, the current distribution of the first electrode plate 21 can be prevented from becoming too concentrated, reducing internal resistance of the first electrode plate 21, and thereby improving the charge and discharge rate of the first electrode plate 21. As shown in FIG. 3B, the multiple first tabs 24 can be connected to the first conductive plate 30 via a first connecting part 240.

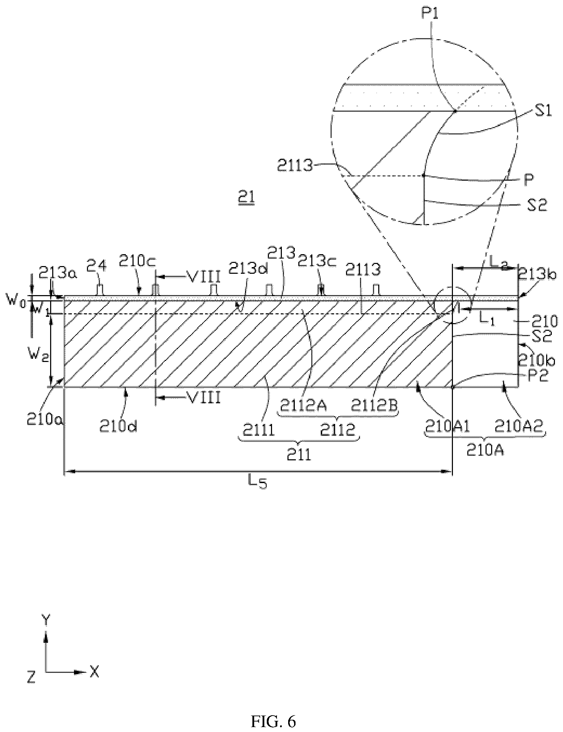

As shown in FIG. 4A and FIG. 6, in the first direction X, the first surface 210A includes a first region 210A1 and a second region 210A2 arranged sequentially. The first region 210A1 includes the first end edge 210a, and the second region 210A2 includes the second end edge 210b. The first conductive material layer 211 is disposed in the first region 210A1 and extends from the fourth end edge 210d to the third end edge 210c. The first conductive material layer 211 is generally connected to the fourth end edge 210d and not connected to the third end edge 210c. The first conductive material layer is generally connected to the fourth end edge, which can allow the distance between an edge of the first conductive material layer 211 close to the fourth end edge 210d and the fourth end edge 210d to be less than or equal to 2 mm. Viewed along the third direction Z, the first conductive material layer 211 is separated from the third end edge 210c. The second region 210A2 is also separated from the first conductive material layer 211, i.e., the second region 210A2 is exposed from the first conductive material layer 211. Viewed from the third direction Z, the first region 210A1 and the second region 210A2 are connected in the first direction X, using an edge, connected to the second region 210A2, of the first conductive material layer 211 on the first surface 210A and an extension line thereof as a boundary line. As shown by dashed lines in enlarged views of FIG. 4A and FIG. 6, the edge of the first conductive material layer 211 extends to an edge of the first surface 210A in the second direction Y, dividing the first surface 210A in the first direction X into the first region 210A1 and the second region 210A2 arranged sequentially.

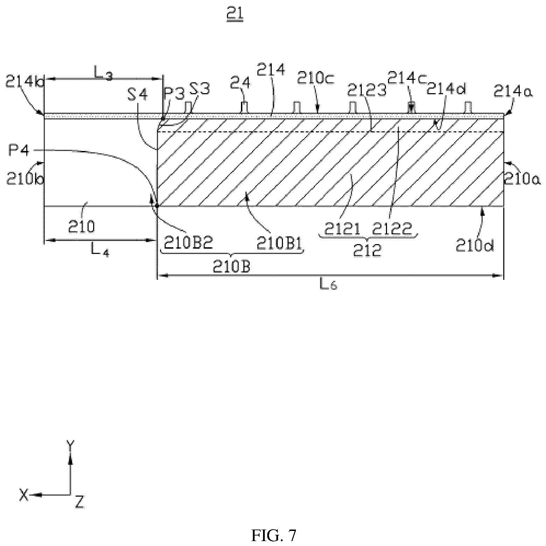

As shown in FIG. 5 and FIG. 7, in the first direction X, the second surface 210B includes a third region 210B1 and a fourth region 210B2 arranged sequentially. The second conductive material layer 212 is disposed in the third region 210B 1 and extends from the fourth end edge 210d to the third end edge 210c. The second conductive material layer 212 is generally connected to the fourth end edge 210d and not connected to the third end edge 210c. The second conductive material layer is generally connected to the fourth end edge, which can allow the distance between an edge of the second conductive material layer 212 close to the fourth end edge 210d and the fourth end edge 210d to be less than or equal to 2 mm. Viewed along the third direction Z, the second conductive material layer 212 is separated from the third end edge 210c. The fourth region 210B2 is separated from the second conductive material layer 212, i.e., the fourth region 210B2 is exposed from the second conductive material layer 212. Viewed from the third direction Z, the third region 210B1 and the fourth region 210B2 are connected in the first direction X, using an edge, connected to the fourth region 210B2, of the second conductive material layer 212 on the second surface 210B and an extension line thereof as a boundary line. As shown by dashed lines in enlarged views of FIG. 5 and FIG. 7, the edge of the second conductive material layer 212 extends to an edge of the second surface 210B in the second direction Y, dividing the second surface 210B in the first direction X into the third region 210B1 and the fourth region 210B2 arranged sequentially.

Together referring to FIG. 3A, in some embodiments, after the stacking body 2 is wound around the winding central axis O to form the electrode assembly 20, the second surface 210B forms an outer surface of the electrode assembly 20, and more specifically, the fourth region 210B2 forms the outer surface of the electrode assembly 20, i.e., the electrode assembly 20 is finished with the first conductive layer 210.

As shown in FIG. 4A, in some embodiments, when the number of the first tabs 24 is multiple, the multiple first tabs 24 may be connected to the third end edge 210c of the first region 210A1.

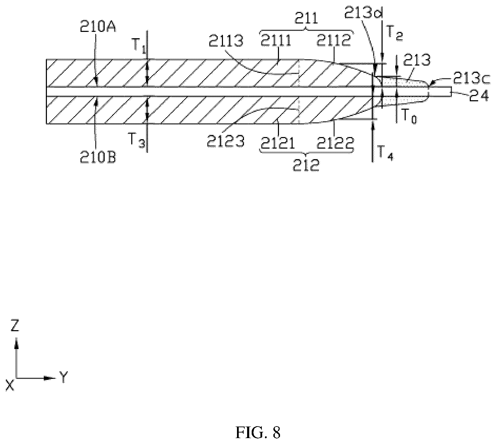

As shown in FIG. 4A and FIG. 8, in the second direction Y, the first conductive material layer 211 includes a first conductive material region 2111 and a first edge region 2112 arranged sequentially. In the preparation of an electrochemical device, an active material slurry is applied onto a conductive layer in a coating manner to form a conductive material layer, thereby preparing an electrode plate. Utilizing the fluidity of the coated active material slurry, the conductive material layer on the conductive layer can have an edge region with a thickness less than that of a main body region. The first conductive material region 2111 corresponds to the main body region, and the first edge region 2112 corresponds to the edge region. There is a boundary line 2113 between the first conductive material region 2111 and the first edge region 2112. The boundary line 2113 can be determined through the following method: (1) measuring the thickness of the first conductive material layer 211 by using a laser range finder or a micrometer, measuring the thicknesses at 5 points, taking an average value of the thicknesses as T₁, and dividing the first conductive material layer 211 in the second direction Y into two regions with the same width, wherein the measurement points are located in a region closer to the fourth end edge 210d; (2) in the second direction Y, measuring the thickness of the first conductive material layer 211 at 1 mm intervals from a position on the first edge region 2112 away from the first conductive material region 2111 toward a position close to the first conductive material region 2111, and calculating an average thickness value T' of three consecutive points, wherein, when T' ≥ 0.97 T₁, the last measurement point is a boundary point; and (3) determining an extension line of the boundary point along the first direction X as the boundary line 2113.

In the third direction Z, the thickness T₂ of the first edge region 2112 is less than the thickness T₁ of the first conductive material region 2111. That is, the first conductive material layer 211 includes the first conductive material region 2111 with the thickness T₁, and further includes another portion with the thickness T₂ less than T₁, and the portion corresponding to the thickness T₂ is the first edge region 2112. In some embodiments, the thickness T₁ of the first conductive material region 2111 is from 20 µm to 200 µm. It can be understood that, if the first electrode plate 21 is obtained by slitting along a cutting line, the thickness of the first conductive material region 2111 is basically uniform. However, when there is a certain distance between the edge of the first conductive material layer 211 close to the fourth end edge 210d and the fourth end edge 210d, another edge region can also be provided on one side of the first conductive material region 2111 away from the first edge region 2112.

As shown in FIG. 5 and FIG. 8, in the second direction Y, the second conductive material layer 212 includes a second conductive material region 2121 and a second edge region 2122 arranged sequentially, and a method for distinguishing the second conductive material region 2121 from the second edge region 2122 can refer to a method for distinguishing the first conductive material region 2111 from the first edge region 2112, which will not be described herein again. There is a boundary line 2123 between the second conductive material region 2121 and the second edge region 2122. A method for determining the boundary line 2123 can refer to a method for determining the boundary line 2113. In the third direction Z, the thickness T₄ of the second edge region 2122 may be less than the thickness T₃ of the second conductive material region 2121. That is, the second conductive material layer 212 includes the second conductive material region 2121 with the thickness T₃, and further includes another portion with the thickness T₄ less than T₃, and the portion corresponding to the thickness T₄ is the second edge region 2122. In some embodiments, the thickness T₃ of the second conductive material region 2121 is from 20 µm to 200 µm. It can be understood that the thickness of the first edge region 2112 may gradually decrease along a direction from the first conductive material region 2111 to the first edge region 2112, therefore, a maximum thickness of the first edge region 2112 may be equal to the thickness T₁ of the first conductive material region 2111, and a minimum thickness of the first edge region 2112 is zero; and in the same way, a maximum thickness of the second edge region 2122 may be equal to the thickness T₃ of the second edge region 2122, and a minimum thickness of the second edge region 2122 is equal to zero. Therefore, the thickness T₁ of the first edge region 2112 and the thickness T₃ of the second edge region 2122 can respectively refer to an average thickness.

As shown in FIG. 4A and FIG. 6, viewed along the third direction Z, the first edge region 2112 includes a first edge S1 overlapping a boundary line between the first region 210A1 and the second region 210A2, and the first edge S1 serves as a finishing end for winding the first edge region 2112. Viewed along the third direction Z, the first conductive material region 2111 includes a second edge S2 overlapping the boundary line between the first region 210A1 and the second region 210A2, and the second edge S2 serves as a finishing end for winding the first conductive material region 2111. The second edge S2 is connected to the first edge S1. In some embodiments, an intersection point of the first edge S1 and the second edge S2 may be located on the boundary line 2113.

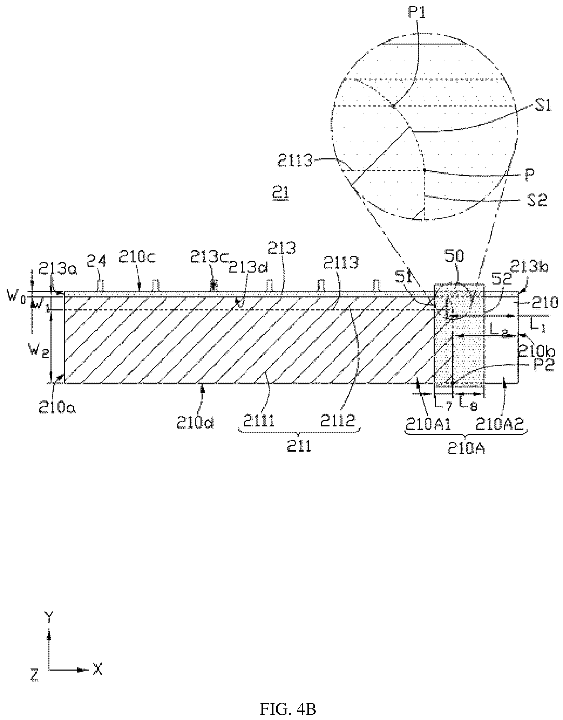

The second edge S2 extends along the second direction Y. The first edge S1 is inclined relative to the second direction Y. "Inclined" means that the first edge S1 is arranged not along the second direction Y but arranged deviating from the second direction Y. As shown in FIG. 4A and FIG. 6, in some embodiments, the first edge S1 is inclined toward one side of the second end edge 210b relative to the second direction Y. At this point, viewed along the third direction Z, the first edge region 2112 includes a first subregion 2112A and a second subregion 2112B arranged sequentially in the first direction X. A boundary line between the first subregion 2112A and the second subregion 2112B is flush with the second edge S2 in the second direction Y. Thus, during cold pressing, when a cold press roller passes over the second region 210A2, part of the pressure may be distributed on part of the first conductive material layer 211 (namely, the second subregion 2112B) including the first edge S1, thereby reducing the possibility of the second region 210A2 wrinkling under excessive pressure. The boundary line 2113 intersects the finishing end for winding the first conductive material layer 211 at an intersection point P. The whole first edge S1 is inclined relative to the second direction Y. That is, the first edge S1 extends obliquely from the intersection point P to a first intersection point P1. In other embodiments, only part of the first edge S1 is inclined relative to the second direction Y. For example, part of the first edge S1 close to the first intersection point P1 is inclined relative to the second direction Y. At this point, the first edge S1 is inclined starting from somewhere between the intersection point P and the first intersection point P1. In other embodiments, part of the second edge S2 close to the first edge S1 may also be inclined relative to the second direction Y. At this point, the first edge S1 is inclined starting from somewhere between the intersection point P and a second intersection point P2. As shown in FIG. 4B, in other embodiments, the first edge S1 may also be inclined toward one side of the first end edge 210a relative to the second direction Y. Thus, the possibility of the second region 210A2 wrinkling under excessive pressure may also be reduced to some extent. A structure shown in FIG. 4A has a better effect on reducing the problem of the first conductive layer 210 wrinkling.

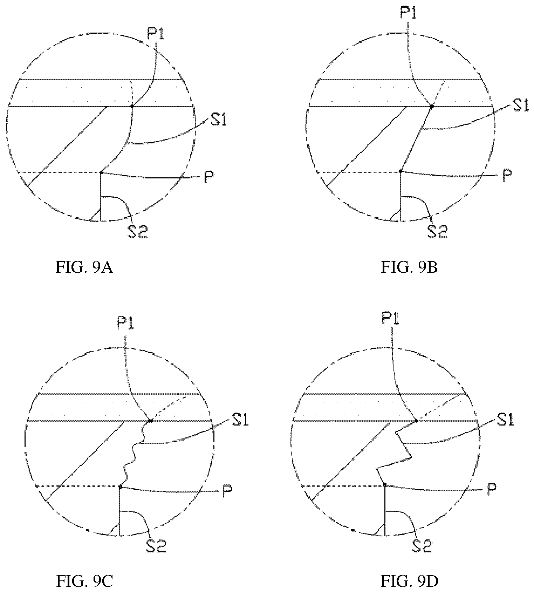

As shown in FIG. 4A and FIG. 6, the first edge S1 is arc-shaped, and the first edge S1 protrudes in a direction away from the second region 210A2. As shown in FIG. 9A, in other embodiments, the first edge S1 is arc-shaped and protrudes in a direction toward the second region 210A2. Thus, it is beneficial for increasing the energy density of the electrochemical device 100 while reducing the possibility of the second region 210A2 wrinkling. As shown in FIG. 9B, FIG. 9C and FIG. 9D, in other embodiments, the shape of the first edge S1 may also be one of a diagonal line, a wavy line or a zigzagged line.

As shown in FIG. 4A and FIG. 6, the first electrode plate 21 further includes a first layer 213, and the first layer 213 may include inorganic insulation particles. The first layer 213 is disposed in a region of the first region 210A1 closer to the third end edge 210c than the fourth end edge 210d. Therefore, viewed along the third direction Z, the first layer 213 partially overlaps the first region 210A1. In the second direction Y, the first edge region 2112 is connected between the first conductive material region 2111 and the first layer 213, i.e., the first edge region 2112 is closer to the first layer 213 than the first conductive material region 2111. In some embodiments, viewed along the third direction Z, the first layer 213 partially overlaps the first edge region 2112 (as shown in FIG. 8). The first edge S1 intersects the first layer 213 at the first intersection point P1, and the second edge S2 intersects the fourth end edge 210d at the second intersection point P2. Therefore, when the first edge S1 is inclined toward one side of the second end edge 210b relative to the second direction Y, in the first direction X, the distance L₁ between the first intersection point P1 and the second end edge 210b is less than the distance L₂ between the second intersection point P2 and the second end edge 210b. As shown in FIG. 4B, when the first edge S1 is inclined toward one side of the first end edge 210a relative to the second direction Y, in the first direction X, the distance L₁ between the first intersection point P1 and the second end edge 210b is greater than the distance L₂ between the second intersection point P2 and the second end edge 210b.

In some embodiments, the inorganic insulation particles of the first layer 213 are selected from at least one of aluminum oxide, silicon oxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide or barium sulfate. The inorganic insulation particles are beneficial for reducing the risk of a short circuit. The inorganic insulation particles have a certain hardness and thickness, and are beneficial for reducing the risk of the first conductive layer 210 wrinkling. Further, the first layer 213 may include a binder. The inorganic insulation particles are provided in the binder, and the binder is used for bonding the inorganic insulation particles into a layered structure. A material of the binder is selected from at least one of polypropylene glycol, sodium polyacrylate, potassium polyacrylate, lithium polyacrylate, polyimide, polyamide-imide, styrene butadiene rubber, polyvinyl alcohol, polyvinylidene fluoride, polyvinylidene difluoride, polytetrafluoroethylene, polyvinyl butyral, waterborne acrylic resin, carboxymethyl cellulose or sodium carboxymethyl cellulose.

As shown in FIG. 4A and FIG. 6, the first layer 213 includes a fifth end edge 213a and a sixth end edge 213b arranged oppositely in the first direction X, and further includes a seventh end edge 213c and an eighth end edge 213d arranged oppositely in the second direction Y. In some embodiments, viewed along the third direction Z, the seventh end edge 213c overlaps the third end edge 210c. The first layer 213 can reduce the possibility of burrs (the burrs may be formed in the process of cutting the first conductive layer 210, which is not limited in this application) of the first conductive layer 210 at the third end edge 210c puncturing the separator film 23 and contacting the second electrode plate 22 to cause a short circuit, or reduce the possibility of the first electrode plate 21 contacting the second electrode plate 22 to cause a short circuit due to the shrinking of an edge of the separator film 23 under high temperature. Additionally, it can be understood that part of the region, exposed from the conductive material layer, of the first region 210A1 can be reserved and cut to obtain the first tabs 24 after the electrode plate is cold-pressed. In this case, the first layer 213 can also reduce a thickness difference between the first region 210A1, covered with the first conductive material layer 211, of the first electrode plate 21 and the first region 210A1, exposed from the first conductive material layer 211, of the first electrode plate, thereby improving the problem of uneven pressure to the first region 210A1 during cold-pressing, reducing the possibility of the first region 210A1 wrinkling, and facilitating the uniform distribution of currents. In some embodiments, when the first layer 213 partially overlaps the first edge region 2112, part of a projection of the eighth end edge 213d in the third direction Z is located within a projection of the first edge region 2112 in the third direction Z. In this case, the first layer 213 can fully cover the region of the first region 210A1 closer to the third end edge 210c than the fourth end edge 210d. In some specific embodiments, in the third direction Z, the width W₀ of the first layer 213 is from 0.5 mm to 3 mm. Optionally, the width W₀ of the first layer 213 is from 1.6 mm to 2.6 mm. In other embodiments, viewed along the third direction Z, the first layer 213 may also adjoin the first edge region 2112. It can be understood that "adjoin" means that regions where the first layer 213 and the first edge region 2112 are in contact do not overlap each other, i.e. viewed in the third direction Z, there are no overlapping portions between the first layer 213 and the first edge region 2112.

Viewed along the third direction Z, the first layer 213 may also cover part of the first edge S1. Further, viewed along the third direction Z, the first layer 213 may also extend from a region overlapping the first region 210A1 away from the first edge S1 to the second region 210A2. In this case, the first layer 213 can further reduce the possibility of burrs of the first conductive layer 210 at the third end edge 210c puncturing the separator film 23 and contacting the second electrode plate 22 to cause a short circuit, or further reduce the possibility of the first electrode plate 21 contacting the second electrode plate 22 to cause a short circuit due to the shrinking of the edge of the separator film 23 under high temperature. Furthermore, when the cold press roller passes over the second region 210A2 along the first direction X (or in an opposite direction of the first direction X), part of pressure may also be distributed on the first layer 213, reducing the possibility of the second region 210A2 wrinkling under excessive pressure.

In conclusion, in this application, the first layer 213 is provided on the first region 210A1, and the first layer 213 not only can cover burrs and reduce the possibility of a short circuit, but also can reduce the possibility of the first region 210A1 wrinkling. Moreover, in this application, the first layer 213 extends from a region overlapping the first region 210A1 away from the first edge S1 to the second region 210A2, and may also reduce the possibility of the second region 210A2 wrinkling under excessive pressure.

As shown in FIG. 4B, when the first edge S1 is inclined toward one side of the first end edge 210a relative to the second direction Y, the required size of the first layer 213 in the first direction X can be reduced while the first layer 213 covers part of the first edge S1, i.e., the amount of the inorganic insulation particles and the binder can be reduced. Furthermore, the mixing degree of the first edge region 2112 and the first layer 213 in an overlapping region thereof is reduced, thereby being beneficial for improving the electrical performance of an edge region of the first edge region 2112. An inclination direction of the first edge S1 can be adjusted by adjusting the coating order of the first conductive material layer 211 and the first layer 213, as well as the coating amount of the first layer 213. In some embodiments, if the coating amount of the first layer 213 is larger, part of the first layer 213 mixed with the first edge region 2112 will drive the finishing end for winding the first edge region 2112 to move along the first direction X, thereby forming the first edge S1 inclined toward one side of the second end edge 210b, namely the structure shown in Figure 4A. Conversely, if the coating amount of the first layer 213 is smaller, the mixing degree of the overlapping region of the first edge region 2112 and the first layer 213 decreases, resulting in the formed first edge S1 being inclined toward one side of the first end edge 210a, namely a structure shown in Figure 4B.

As shown in FIG. 4A and FIG. 6, in some embodiments, viewed along the third direction Z, the first layer 213 extends from the first end edge 210a to the second end edge 210b. That is, the seventh end edge 213c of the first layer 213 overlaps the first end edge 210a, and the eighth end edge 213d of the first layer 213 overlaps the second end edge 210b, so that the first layer 213 spans the entire second region 210A2 in the first direction X. Thus, during the process of the cold press roller passing over the whole second region 210A2, the first layer 213 can distribute part of pressure on the second region 210A2, and reduce the possibility of the second region 210A2 wrinkling under excessive pressure.

As shown in FIG. 8, the thickness of the first edge region 2112 gradually decreases along a direction from the first conductive material region 2111 to the first edge region 2112, and the thickness of the first layer 213 also gradually decreases along the direction from the first conductive material region 2111 to the first edge region 2112. Viewed along the third direction Z, the first layer 213 partially overlaps the first edge region 2112. Therefore, at least within the overlapping region of the first layer 213 and the first edge region 2112, the thickness of the first layer 213 is greater than that of the first edge region 2112. In some embodiments, in the third direction Z, the thickness T₂ (herein refers to an average thickness of the first edge region 2112) of the first edge region 2112 is between the thickness T₀ (herein refers to an average thickness of the first layer 213) of the first layer 213 and the thickness T₁ of the first conductive material region 2111. That is, the thickness T₀ of the first layer 213 is less than the thickness T₂ of the first edge region 2112, and the thickness T₂ of the first edge region 2112 is less than the thickness T₁ of the first conductive material region 2111. Therefore, the first edge region 2112 achieves a thickness buffering effect between the first conductive material region 2111 and the first layer 213, thereby further improving the problem of uneven pressure during cold pressing, and reducing the possibility of the first conductive layer 210 wrinkling. In some embodiments, when 5 µm ≤ T₀ ≤ 50 µm, the problem of the first conductive layer 210 wrinkling can be improved, thereby improving the safety, and reducing the impact on the energy density. The average thickness of the first edge region 2112 can be measured by the following method: measuring the thickness (namely the distance from the surface of the first edge region 2112 to the first surface 210A) of the first edge region 2112 at 1 mm intervals along a width direction (an opposite direction of the second direction Y) of the electrode plate by using the laser range finder or the micrometer, and obtaining multiple thickness values. The thickness T₂ of the first edge region 2112 is an average value of the above multiple thickness values. The average thickness of the first layer 213 is measured by a similar method.

As shown in FIG. 4A and FIG. 6, in some embodiments, in the second direction Y, the width W₁ of the first edge region 2112 is between the width W₀ of the first layer 213 and the width W₂ of the first conductive material region 2111. That is, the width W₀ of the first layer 213 is less than the width W₁ of the first edge region 2112, and the width W₁ of the first edge region 2112 is less than the width W₂ of the first conductive material region 2111. Since the width W₂ of the first conductive material region 2111 is larger, an area proportion of the first edge region 2112 in the first conductive material layer 211 is reduced, which is beneficial for increasing the energy density of the electrochemical device 100. In some specific embodiments, the width W₀ of the first layer 213 is from 0.5 mm to 3 mm. In this case, the first layer 213 not only can fully cover burrs on the third end edge 210c, but also reduces the impact of the first layer 213 on the energy density of the electrochemical device 100. Optionally, the width W₀ of the first layer 213 is from 1.6 mm to 2.6 mm.

As shown in FIG. 7, in some embodiments, viewed along the third direction Z, the second edge region 2122 includes a first edge S3 overlapping a boundary line between the third region 210B1 and the fourth region 210B2, and the third edge S3 serves as a finishing section for winding the second edge region 2122. Viewed along the third direction Z, the second conductive material region 2121 includes a fourth edge S4 overlapping the boundary line between the third region 210B1 and the fourth region 210B2, and the fourth edge S4 serves as a finishing section for winding the second conductive material region 2121. The third edge S3 is connected to the fourth edge S4. The boundary line 2123 passes through an intersection point of the third edge S3 and the fourth edge S4. The fourth edge S4 extends along the second direction. The third edge S3 is inclined relative to the second direction Y. In other embodiments, the third edge S3 is inclined toward one side of the first end edge 210a relative to the second direction Y. In other embodiments, the third edge S3 may also be inclined toward one side of the second end edge 210b relative to the second direction Y.

As shown in FIG. 5 and FIG. 7, in some embodiments, the first electrode plate 21 may also include a second layer 214, and the second layer 214 may also include inorganic insulation particles. The second layer 214 is disposed in a region of the third region 210B1 closer to the third end edge 210c than the fourth end edge 210d. Therefore, viewed along the third direction Z, the second layer 214 partially overlaps the third region 210B1. In the second direction Y, the second edge region 2122 is connected between the second conductive material region 2121 and the second layer 214. The third edge S3 intersects the second layer 214 at a third intersection point P3, and the fourth edge S4 intersects the fourth end edge 210d at a fourth intersection point P4. Therefore, when the third edge S3 is inclined toward one side of the first end edge 210a relative to the second direction Y, in the first direction X, the distance L₃ between the third intersection point P3 and the second end edge 210b is greater than the distance L₄ between the fourth intersection point P4 and the second end edge 210b.

As shown in FIG. 5 and FIG. 7, the second layer 214 includes a ninth end edge 214a and a tenth end edge 214b arranged oppositely in the first direction X, and further includes an eleventh end edge 214c and a twelfth end edge 214d arranged oppositely in the second direction Y. In some embodiments, viewed along the third direction Z, the eleventh end edge 214c overlaps the third end edge 210c, and the second layer 214 is connected to the first conductive material region 2111. The second layer 214 can reduce the possibility of burrs of the first conductive layer 210 at the third end edge 210c puncturing the separator film 23 and contacting the second electrode plate 22 to cause a short circuit, or reduce the possibility of the first electrode plate 21 contacting the second electrode plate 22 to cause a short circuit due to the shrinking of the edge of the separator film 23 under high temperature. Viewed along the third direction Z, the second layer 214 also extends from a region overlapping the third region 210B 1 away from the third edge S3 to the fourth region 210B2.

In some embodiments, the inorganic insulation particles of the second layer 214 are selected from at least one of aluminum oxide, silicon oxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide or barium sulfate. The inorganic insulation particles of the second layer 214 may be the same as or different from those of the first layer 213. Further, the second layer 214 may include a binder, and the inorganic insulation particles are provided in the binder. A material of the binder is selected from at least one of polypropylene glycol, sodium polyacrylate, potassium polyacrylate, lithium polyacrylate, polyimide, polyamide-imide, styrene butadiene rubber, polyvinyl alcohol, polyvinylidene fluoride, polyvinylidene difluoride, polytetrafluoroethylene, polyvinyl butyral, waterborne acrylic resin, carboxymethyl cellulose or sodium carboxymethyl cellulose. The binder of the second layer 214 may be the same as or different from that of the first layer 213.

In this application, the second layer 214 is provided on the third region 210B 1, and the second layer 214 not only can cover burrs and reduce the possibility of a short circuit, but can reduce the possibility of the third region 210B1 wrinkling. Moreover, in this application, the second layer 214 extends from the region overlapping the third region 210B1 away from the third edge S3 to the fourth region 210B2, and may also reduce the possibility of the fourth region 210B2 wrinkling under excessive pressure.

As shown in FIG. 6 and FIG. 7, in some embodiments, the coating lengths of the first conductive material layer 211 and the second conductive material layer 212 in the first direction X are different. In the first direction X, the distance L₅ from the first end edge 210a to the second edge S2 is not equal to the distance L₆ from the third end edge 210c to the fourth edge S4. For example, in some embodiments, in the first direction X, the distance L₅ from the first end edge 210a to the second edge S2 is greater than the distance L₆ from the first end edge 210a to the fourth edge S4. Since the position of the second edge S2 may roughly reflect the position of the finishing end for winding the first conductive material layer 211, and the position of the fourth edge S4 may roughly reflect the position of the finishing end for winding the second conductive material layer 212, as shown in FIG. 3A, after the stacking body 2 is wound around the winding central axis O to form the electrode assembly 20, the finishing end of the first conductive material layer 211 is located on an outermost circle of the first electrode plate 21 in multiple layers of the first electrode plate 21 included in the first section 201, and the finishing end of the second conductive material layer 212 is located on an outer circle, next to the outermost circle, of the first electrode plate 21 in the multiple layers of the first electrode plate 21 included in the first section 201. In this case, compared with the case that the finishing end of the second conductive material layer 212 also extends to the outermost circle of the first electrode plate 21 in the first section 201, this application can reduce waste of a conductive material and increase the energy density.

As shown in FIG. 3A and FIG. 4A, in some embodiments, the electrochemical device 100 further includes a third layer 50. The third layer 50 includes an insulation material. The insulation material may be selected from at least one of polypropylene, polyethylene, polyvinylidene difluoride, vinylidene difluoride-hexafluoropropylene copolymer, poly(methyl methacrylate) or polyethylene glycol. The third layer 50 may be a single-sided adhesive tape or a double-sided adhesive tape including the insulation material. In other embodiments, the third layer 50 may also be a ceramic coating. Viewed along the third direction Z, the third layer 50 covers the first edge S1 and the second edge S2, and the third layer 50 partially overlaps the first conductive material layer 211, the first layer 213, the first region 210A1 and the second region 210A2. In this case, the third layer 50 may achieve an effect of insulation and protection on the exposed second region 210A2, reducing the possibility of the second region 210A2 contacting the second electrode plate 22 to cause a short circuit during mechanical abuse, and also reducing the possibility that the second region 210A2 is torn during mechanical abuse and the torn first conductive layer 210 punctures the separator film 23 and contacts the second electrode plate 22 to cause a short circuit. The third layer 50 includes a thirteenth end edge 51 and a fourteenth end edge 52 arranged oppositely in the first direction X. Viewed along the third direction Z, the fourteenth end edge 52 is closer to the second end edge 210b than the thirteenth end edge 51. In some embodiments, in the first direction X, the distance L₇ between the fourteenth end edge 52 and the second edge S2 is less than the distance L₈ between the thirteenth end edge 51 and the second edge S2, so that the area of the third layer 50 covering the second region 210A2 is greater than that of the third layer 50 covering the first conductive material layer 211. In this way, not only the third layer 50 can provide a better protection effect to the exposed second region 210A2, but also the influence that part of lithium ions cannot be smoothly removed due to the third layer 50 covering the first conductive material layer 211 is reduced.

It can be understood that, compared to the case where the first edge S1 is inclined toward one side of the second end edge 210b in FIG. 4A, when the first edge S1 is inclined toward one side of the first end edge 210a in the second direction Y in FIG. 4B, a contact area between the third layer 50 and the second region 210A2 can be increased, thereby enhancing the stability of the third layer 50 attached to the second region 210A2.

Similarly, compared to the case where the first edge S1 protrudes toward the second region 210A2 in FIG. 9A, when the first edge S1 protrudes toward a direction away from the second region 210A2 in FIG. 4A, the contact area between the third layer 50 and the second region 210A2 can be increased, thereby enhancing the stability of the third layer 50 attached to the second region 210A2. As shown in FIGs 9B-9D, the shape of the first edge S1 may also increase the contact area between the third layer 50 and the second region 210A2 to some extent.

In some embodiments, in the second direction Y, the third layer 50 extends beyond the third end edge 210c from a region overlapping the first layer 213. In this case, a portion of the third layer 50 beyond the third end edge 210c can cover burrs on the third end edge 210c and can reduce the possibility of the burrs puncturing the separator film 23 and contacting the second electrode plate 22 to cause a short circuit. In the second direction Y, the third layer 50 may also extend beyond the fourth end edge 210d from a region overlapping the first conductive material layer 211 and the second region 210A2. In this case, a portion of the third layer 50 beyond the fourth end edge 210d can cover the burrs on the fourth end edge 210d and can reduce the possibility of the burrs puncturing the separator film 23 and contacting the second electrode plate 22 to cause a short circuit. In some specific embodiments, in the second direction Y, the distance of the third layer 50 beyond the third end edge 210c is from 0.5 mm to 2 mm, and the distance of the third layer 50 beyond the fourth end edge 210d is from 0.5 mm to 2 mm.

As shown in FIG. 3A and FIG. 5, similarly, in order to perform insulation protection on the fourth region 210B2 and reduce the possibility of a contact short circuit of the fourth region 210B2, a fourth layer 60 may be further disposed on the fourth region 210B2. A material of the fourth layer 60 and the position thereof on the fourth region 210B2 can be configured with reference to a material of the third layer 50 and the position thereof on the second region 210A2, which will not be repeated herein.

As shown in FIG. 3A, in some embodiments, the second electrode plate 22 includes a third conductive material layer 221, a second conductive layer 220 and a fourth conductive material layer 222 that are stacked. The second conductive layer 220 may have a function of current collection. For example, the second conductive layer 220 may include copper, nickel or a carbon-based conductive material. In some embodiments, the second conductive layer 220 includes copper. Both the third conductive material layer 221 and the fourth conductive material layer 222 include an active substance, which can be selected from at least one of a graphite material, an alloy material, a lithium metal and alloys thereof. The graphite material can be selected from at least one of artificial graphite and natural graphite; and the alloy material can be selected from at least one of silicon, silicon oxide, tin and titanium sulfide. In order to reduce the possibility of the second electrode plate 22 wrinkling, a structure of the second electrode plate 22 may adopt a design similar to the first electrode plate 21. For example, the first layer also is provided on the second conductive layer 220, so that the first layer extends to a blank region of the second conductive layer 220 where no conductive material layer is provided.

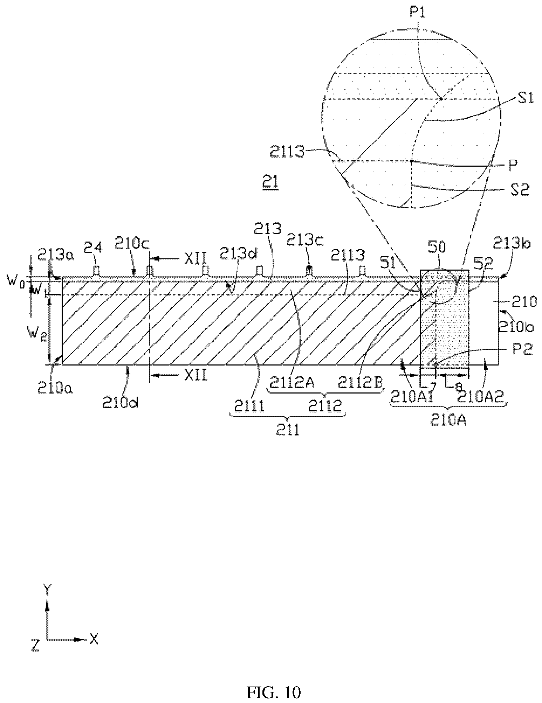

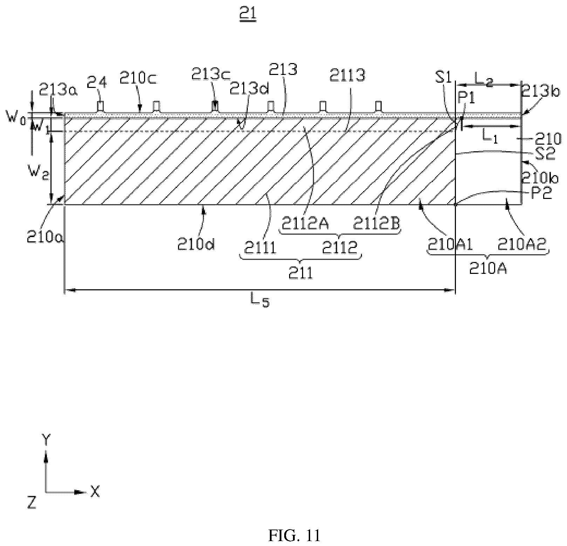

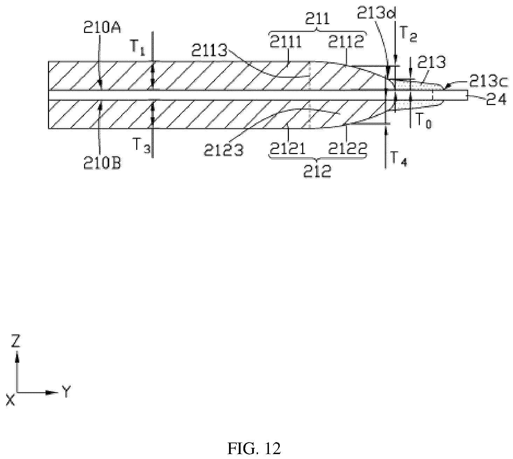

Referring to FIG. 10 to FIG. 12, another embodiment of this application further provides an electrochemical device (not shown in the figure), which is different from the electrochemical device 100 in structure of the first electrode plate 21. In this embodiment, viewed along the third direction Z, the first layer 213 extends beyond the third end edge 210c along the second direction Y from a region overlapping the first region 210A1. Therefore, viewed along the third direction Z, the first layer 213 partially overlaps the first tabs 24, and the seventh end edge 213c of the first layer 213 is provided on the first tabs 24. A region of the first layer 213 overlapping the first tabs 24 is configured to reduce the possibility of burrs on edges of the first tabs 24 puncturing the separator film 23 and contacting the second electrode plate 22 to cause a short circuit. Regions of the first tabs 24 without the first layer 213 are configured to extend out of the housing 10 and be electrically connected to an external device. It can be understood that in this case, the width W₀ of the first layer 213 does not include the width of a portion where the first layer 213 overlaps the first tabs 24.

In some embodiments, in the second direction Y, the width of the overlapping region of the first layer 213 and the first tabs 24 is from 0.5 mm to 2 mm, so that the first tabs 24 have sufficient widths in the second direction Y to extend out of the housing 10 and be electrically connected to the external device. In some specific embodiments, the width of the overlapping region of the first layer 213 and the first tabs 24 is from 0.5 mm to 1.5 mm.

The electrochemical device 100 of this application includes all devices capable of undergoing electrochemical reactions. Specifically, the electrochemical device 100 includes all types of primary batteries, secondary batteries, fuel cells, solar cells, and capacitors (e.g., supercapacitors). Optionally, the electrochemical device 100 may be a lithium secondary battery, including lithium metal secondary batteries, lithium-ion secondary batteries, lithium polymer secondary batteries, and lithium-ion polymer secondary batteries.

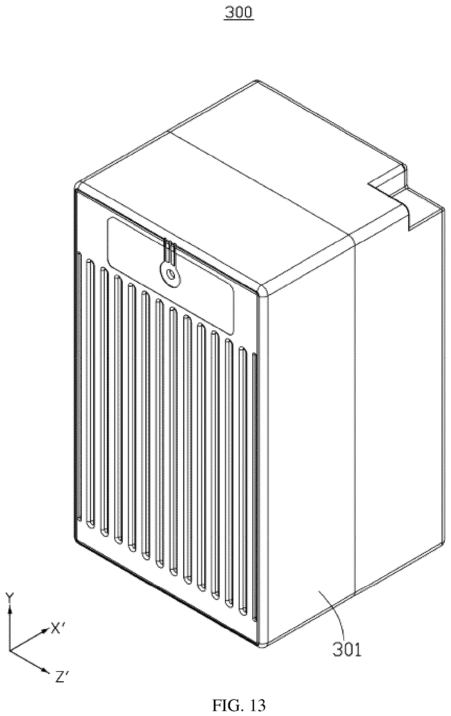

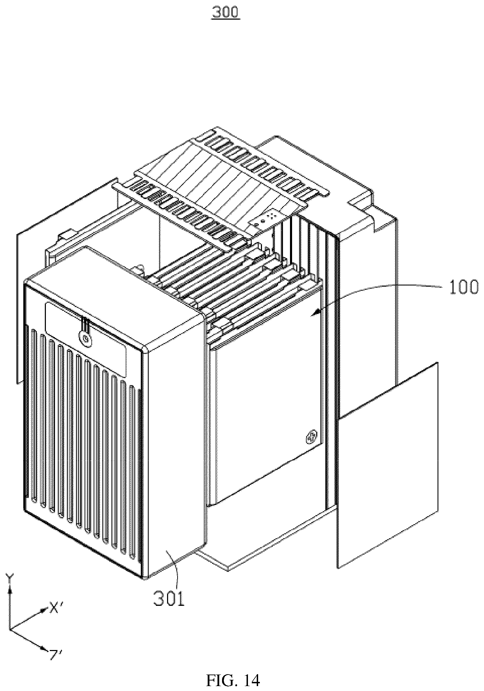

Referring to Fig. 13 to Fig. 14, an embodiment of this application further provides a module 300, including a shell 301 and a plurality of electrochemical devices 100. The plurality of electrochemical devices 100 are disposed in the shell 301, and the plurality of electrochemical devices 100 are connected in parallel or in series.

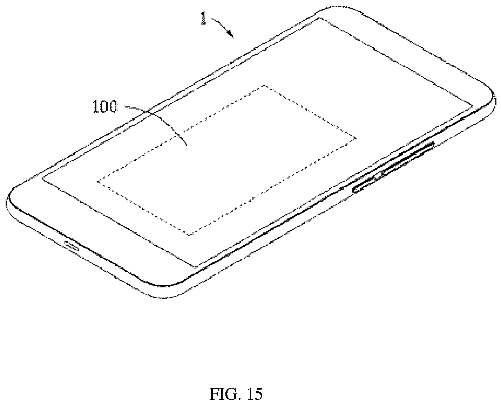

Referring to FIG. 15, an embodiment of this application further provides an electronic device 1, including the electrochemical device 100. In another embodiment, the electronic device 1 may further include the module 300. In one embodiment, the electronic device 1 of this application may be, but is not limited to, a laptop computer, a pen-input computer, a mobile computer, an e-book player, a portable phone, a portable fax machine, a portable copying machine, a portable printer, a head-mounted stereo headset, a video recorder, a liquid crystal display television, a handheld vacuum cleaner, a portable CD player, a mini disc, a transceiver, an electronic organizer, a calculator, a memory card, a portable audio recorder, a radio, a backup power supply, a motor, a car, a motorcycle, a power-assisted bicycle, a bicycle, a lighting appliance, a toy, a game console, a clock, an electric tool, a flashlight, a camera, a household large storage battery, a lithium-ion capacitor, and the like.

The performance of the electrochemical devices provided in this application is described below through specific embodiments and comparative examples. This application is described by taking the first electrode plate as a positive electrode plate of a lithium-ion battery and the first conductive layer as a positive electrode current collector as an example in combination with a specific preparation process and a testing method. Those skilled in the art should understand that the preparation method described in this application is only an example, and any other suitable preparation method belongs to the scope of this application.

### Embodiment 1

Preparation of the first electrode plate 21: mixing lithium cobalt oxide (LiCoO₂), conductive carbon black (Super P) and polyvinylidene difluoride (PVDF) according to a weight ratio of 97.5:1.0:1.5, adding N-methyl-2-pyrrolidone (NMP) as a solvent, preparing a slurry with a solid content of 75 wt%, and stirring evenly; using an aluminum foil with a thickness of 12 µm as the first conductive layer 210, bonding an adhesive tape to the first surface 210A of the first conductive layer 210, and evenly coating the slurry on the first region 210A1 of the first surface 210A with the adhesive tape; drying at 110 °C; repeating the coating step on the second surface 210B of the first conductive layer 210;
coating an insulating slurry, including boehmit and polytetrafluoroethylene, on the first conductive layer 210, and drying to remove the solvent again to obtain the first layer 213 and the second layer 214, wherein the first layer 213 and the second layer 214 respectively extend from the first end edge 210a of the first conductive layer 210 to the second end edge 210b; and
conducting cold pressing, tab cutting, plate slicing (namely, cutting an electrode plate into a required size), and obtaining the first electrode plate 21. The first conductive material layer 211 and the second conductive material layer 212 on two opposite surfaces of the first electrode plate 21 have the same thickness, and parameter values are recorded in Table 1.

### Embodiment 2

The difference from Embodiment 1 is that the first layer 213 does not extend to the second region 210A2 of the first surface 210A, and the second layer does not extend to the fourth region 210B2 of the second surface 210B.

### Embodiment 3

The difference from Embodiment 1 is the parameter values of L₂, L₄, T₂, and the like.

Select 10 first electrode plates 21 from each group of Embodiments and Comparative Examples, observe whether the first electrode plates 21 in each Embodiment and Comparative Example have wrinkles after cold pressing, and correspondingly calculate the cold press yields of the first electrode plates 21 in the Embodiments and Comparative Examples. The cold press yield means that, in each group of the first electrode plates 21, a percentage of the number of the first electrode plates 21 having the problems of wrinkles and the like in the total number of the group of first electrode plates 21. The corresponding test results are recorded in Table 1.

**Table 1**

| | Embodiment 1 | Embodiment 2 | Embodiment 3 |
|---|---|---|---|
| Total length of the first electrode plate (mm) | 1050 | 1050 | 1050 |
| L₁ (mm) | 24.5 | 24.5 | 24.5 |
| L₂ (mm) | 23 | 23 | 24.5 |
| L₃ (mm) | 100 | 100 | 100 |
| L₄ (mm) | 101.5 | 101.5 | 100 |
| W₀ (mm) | 2 | 2 | 2 |
| W₁ (mm) | 4.5 | 4.5 | 0 |
| W₂ (mm) | 86 | 86 | 90.5 |
| T₀ (mm) | 15 | 15 | 15 |
| T₂ (mm) | 18-21 | 18-21 | 0 |
| T₁ (mm) | 21 | 21 | 21 |
| Positions of the first layer and the second layer | The first layer extends to the second region, and the second layer extends to the fourth region | The first layer does not extend to the second region, and the second layer does not extend to the fourth region | The first layer extends to the second region, and the second layer extends to the fourth region |
| Cold press yield | 99.5% | 83% | 89% |

From the test results in Table 1, it can be seen that compared to Embodiment 2, Embodiment 1 achieves a relatively higher cold press yield by extending the first layer 213 and the second layer 214 to the second region 210A2 and the fourth region 210B2, respectively. Compared to Embodiment 3, the cold press yield is relatively higher in Embodiment 1 due to the first edge S1 of the conductive material being inclined.

The above disclosures are only preferred embodiments of this application, but are not intended to limit this application, and therefore, equivalent variations made according to this application still belong to the scope of protection of this application.

## Claims

1. An electrochemical device, comprising an electrode assembly, wherein the electrode assembly is formed by winding a stacking body, and the stacking body comprises a first electrode plate, a second electrode plate and a separator film disposed between the first electrode plate and the second electrode plate, wherein
the first electrode plate comprises a first conductive layer, a first conductive material layer and a first layer; the first conductive layer comprises a first surface and a second surface arranged oppositely in a third direction; the first surface comprises a first region and a second region arranged sequentially in a first direction, the first conductive material layer is disposed in the first region, and the second region is exposed from the first conductive material layer; the first conductive material layer comprises a first conductive material region and a first edge region, and the first conductive material region and the first edge region are arranged sequentially in a second direction;
wherein the first direction, the second direction and the third direction are perpendicular to each other; viewed from the third direction, the first edge region comprises a first edge overlapping a boundary line between the first region and the second region, and the first edge is inclined relative to the second direction; and
wherein the first layer comprises inorganic insulation particles, part of the first layer is disposed in the first region; in the second direction, the first edge region is connected between the first conductive material region and the first layer; and viewed from the third direction, the first layer extends from the first region to the second region.

2. The electrochemical device according to claim 1, wherein the first conductive layer comprises a first end edge and a second end edge arranged oppositely in the first direction, the first region comprises the first end edge, the second region comprises the second end edge, and the first layer extends from the first end edge to the second end edge.

3. The electrochemical device according to claim 2, wherein the first conductive layer further comprises a third end edge and a fourth end edge arranged oppositely in the second direction, and the first layer is closer to the third end edge than the first edge region; and
wherein the electrochemical device further comprises first tabs arranged integrally with the first conductive layer, and the first tabs are connected to the third end edge.

4. The electrochemical device according to claim 3, wherein, viewed from the third direction, the first conductive material region comprises a second edge overlapping a boundary line between the first region and the second region; the first edge intersects the first layer at a first intersection point, and the second edge intersects the fourth end edge at a second intersection point; and in the first direction, the distance between the first intersection point and the second end edge is less than the distance between the second intersection point and the second end edge.

5. The electrochemical device according to claim 3, wherein, viewed from the third direction, the first conductive material region comprises a second edge overlapping the boundary line between the first region and the second region; the first edge intersects the first layer at a first intersection point, and the second edge intersects the fourth end edge at a second intersection point; and in the first direction, the distance between the first intersection point and the second end edge is greater than the distance between the second intersection point and the second end edge.

6. The electrochemical device according to any one of claims 1 to 5, wherein the shape of the first edge is one of an arc-shaped line, a wavy line, a zigzagged line, or a diagonal line.

7. The electrochemical device according to claim 3, wherein the first electrode plate further comprises a second conductive material layer and a second layer; the second surface comprises a third region and a fourth region arranged sequentially in the first direction, the second conductive material layer is disposed in the third region, and the fourth region is exposed from the second conductive material layer; the second conductive material layer comprises a second conductive material region and a second edge region, and the second conductive material region and the second edge region are arranged sequentially along the second direction;
wherein, viewed from the third direction, the second edge region comprises a third edge overlapping a boundary line between the third region and the fourth region, and the third edge is inclined relative to the second direction; and
wherein the second layer comprises inorganic insulation particles, and part of the second layer is disposed in the third region; in the second direction, the second edge region is connected between the second conductive material region and the second layer; and viewed from the third direction, the second layer extends from the third region to the fourth region.

8. The electrochemical device according to claim 7, wherein, viewed from the third direction, the second conductive material region comprises a fourth edge overlapping the boundary line between the third region and the fourth region; the third edge intersects the second layer at a third intersection point, and the fourth edge intersects the fourth end edge at a fourth intersection point; and in the first direction, the distance between the third intersection point and the second end edge is less than the distance between the fourth intersection point and the second end edge.

9. The electrochemical device according to claim 8, wherein in the first direction, the distance from the first end edge to the second edge is not equal to the distance from the first end edge to the fourth edge.

10. The electrochemical device according to claim 7, wherein an outer surface of the electrode assembly serves as the second surface.

11. The electrochemical device according to claim 3, wherein the first layer is further disposed on the first tabs.

12. The electrochemical device according to claim 11, wherein in the second direction, the width of the first layer disposed on the first tabs is from 0.5 mm to 2 mm.

13. The electrochemical device according to claim 3, wherein the number of the first tabs is multiple, and the multiple first tabs are connected to the third end edge of the first region.

14. The electrochemical device according to claim 1, wherein in the third direction, the thickness of the first layer is less than that of the first edge region.

15. The electrochemical device according to claim 1, wherein in the second direction, the width of the first layer is less than that of the first edge region, and the width of the first edge region is less than that of the first conductive material region.

16. The electrochemical device according to claim 15, wherein in the second direction, the width of the first layer is from 0.5 mm to 3 mm.

17. The electrochemical device according to claim 4, further comprising a third layer, wherein the third layer comprises an insulation material; and viewed from the third direction, the third layer covers the first edge and the second edge, and at least partially overlaps any one of the first conductive material layer, the first layer and the second region.

18. The electrochemical device according to claim 17, wherein in the second direction, the third layer extends beyond at least one of the third end edge or the fourth end edge.

19. The electrochemical device according to claim 18, wherein in the second direction, the third layer extends beyond the third end edge by 0.5 mm to 2 mm, and beyond the fourth end edge by 0.5 mm to 2 mm.

20. The electrochemical device according to claim 1, wherein the first layer further comprises a binder, and a material of the binder is selected from at least one of polypropylene glycol, sodium polyacrylate, potassium polyacrylate, lithium polyacrylate, polyimide, polyamide-imide, styrene butadiene rubber, polyvinyl alcohol, polyvinylidene fluoride, polyvinylidene difluoride, polytetrafluoroethylene, polyvinyl butyral, waterborne acrylic resin, carboxymethyl cellulose or sodium carboxymethyl cellulose.

21. The electrochemical device according to claim 1, wherein the inorganic insulation particles are selected from at least one of aluminum oxide, silicon oxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide or barium sulfate.

22. The electrochemical device according to claim 1, wherein the first electrode plate is a cathode, and the first conductive layer is an aluminum foil.

23. A module, comprising a shell, wherein the module further comprises the multiple electrochemical devices according to any one of claims 1 to 22, and the multiple electrochemical devices are disposed in the shell.

24. An electronic device, comprising the electrochemical device according to any one of claims 1 to 22, or comprising the module according to claim 23.
